# EUROPEAN PATENT APPLICATION

(11) **EP 4 831 461 A1**
(43) Date of publication of application: **28.10.2026**
(21) Application number: 26172625.1
(22) Date of filing: 16.04.2026
(51) Int. Cl.: F01P 5/10, F01P 7/14, F01P 7/16, F16K 11/085, F16K 27/00, F28F 27/02

(54) **COOLING MODULE**

(30) Priority: 21.04.2025 JP 2025069372
(71) Applicant: AISIN CORPORATION, Kariya, Aichi 448-8650 (JP)
(72) Inventor: TANAKA, Hirokazu, Kariya, Aichi, 448-8650 (JP); INAMI, Kaketo, Kariya, Aichi, 448-8650 (JP); KIHARA, Masao, Kariya, Aichi, 448-8650 (JP)
(74) Representative: Kramer Barske Schmidtchen Patentanwälte PartG mbB

(57) **Abstract**

A cooling module (1) includes: a valve body (10) that pivots in response to an input to an input shaft (12); a manifold (20) including a housing (23), in which a valve body accommodating portion (28) accommodating the valve body is formed and a fluid flow path (L) through which a fluid flows is formed; a seal body (30) that is provided between an outer peripheral surface (16) of the valve body and an inner wall portion (28A) of the valve body accommodating portion and allows the valve body to slide when the valve body pivots; a plurality of pumps (40) that pressure-feed the fluid flowing through the fluid flow path; and at least one reserve tank (50) that absorb thermal expansion of the fluid in the fluid flow path, the number of the at least one reserve tank being smaller than the number of the pumps. The inner wall portion of the valve body accommodating portion is provided with a plurality of ports (28B) including a plurality of discharge ports (28C) communicating with respective suction ports of the plurality of pumps. The seal body has a plurality of through-holes (31) facing the plurality of ports. The plurality of through-holes includes a plurality of facing through-holes (32) facing the plurality of discharge ports. A communication path (60) communicating the plurality of facing through-holes with each other is provided, and a part of the communication path is formed by an outer peripheral surface (30A) of the seal body and the inner wall portion of the valve body accommodating portion.

## Description

### TECHNICAL FIELD

This disclosure relates to a cooling module.

### BACKGROUND DISCUSSION

For example, an electric vehicle that travels using electric energy, such as a hybrid electric vehicle (HEV), a plug-in hybrid electric vehicle (PHEV), a battery electric vehicle (BEV), or a fuel cell electric vehicle (FCEV), is equipped with a motor serving as a travel drive source and a battery for driving the motor. Since it is difficult to maintain a desired function when such a motor or a battery generates heat, a technique for cooling the motor or the battery has been studied (for example, JP 2022-545035A (Reference 1)).

Reference 1 describes an automobile thermal management system. The automobile thermal management system includes a refrigerant loop system, a motor liquid cooling loop system, an air conditioner liquid cooling loop system, and a battery liquid cooling loop system. The motor liquid cooling loop system is provided with a multifunction valve including a water pump, the air conditioner liquid cooling loop system is provided with an integrated valve pump including a water pump, and the battery liquid cooling loop system is provided with a general kettle pump including a water pump.

When a plurality of pumps are provided in a cooling circuit as in the automobile thermal management system described in Reference 1, it is desirable to adjust a pressure in order to stabilize a flow rate of the pumps. As a method of adjusting the pressure, it is conceivable to provide a reserve tank at each suction port of the plurality of pumps. However, when the reserve tank is provided at the suction port of each of the plurality of pumps, the cost of the reserve tank is required, and a space for providing the reserve tank is required. Further, a volume of a coolant increases, and thermal management becomes complicated.

On the other hand, it is conceivable to use a plurality of reserve tanks in common, but a communication path that communicates the suction port of each of the plurality of pumps with the reserve tank is required. However, in the automobile thermal management system described in Reference 1, it is not assumed that such a communication path is provided in a space-saving manner.

A need thus exists for a compact cooling module capable of adjusting the pressure of the suction ports of the plurality of pumps is required.

### SUMMARY

According to an aspect of this disclosure, a cooling module includes: a valve body that pivots in response to an input to an input shaft; a manifold including a housing, in which a valve body accommodating portion accommodating the valve body is formed and a fluid flow path through which a fluid flows is formed; a seal body that is provided between an outer peripheral surface of the valve body and an inner wall portion of the valve body accommodating portion and allows the valve body to slide when the valve body pivots; a plurality of pumps that pressure-feed the fluid flowing through the fluid flow path; and at least one reserve tank that absorbs thermal expansion of the fluid in the fluid flow path, the number of the at least one reserve tank being smaller than the number of the pumps, in which the inner wall portion of the valve body accommodating portion is provided with a plurality of ports including a plurality of discharge ports communicating with respective suction ports of the plurality of pumps, the seal body has a plurality of through-holes facing the plurality of ports, the plurality of through-holes includes a plurality of facing through-holes facing the plurality of discharge ports, and a communication path communicating the plurality of facing through-holes with each other is provided, and a part of the communication path is formed by an outer peripheral surface of the seal body and the inner wall portion of the valve body accommodating portion.

According to the above aspect of this disclosure, since a part of the communication path that communicates the plurality of facing through-holes with each other is formed by the outer peripheral surface of the seal body and the inner wall portion of the valve body accommodating portion, it is not necessary to provide a path for forming the communication path in this part by, for example, a separate member or by processing the housing. Therefore, even when the communication path is formed, a compact cooling module can be implemented. Since the number of components does not increase, it is possible to limit an increase in manufacturing cost such as management cost and assembly cost. Further, since the suction ports of the plurality of pumps are in communication with each other via the facing through-holes that are in communication with each other via the communication path, it is possible to easily adjust the pressure of these suction ports.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is an exploded perspective view of a cooling module;
Fig. 2 is a cross-sectional view of a valve body and a seal body;
Fig. 3 is an exploded perspective view of the valve body and the seal body;
Fig. 4 is a cross-sectional view of the valve body and the seal body;
Fig. 5 is a diagram showing a flow state of a fluid;
Fig. 6 is a diagram showing the flow state of the fluid;
Fig. 7 is a diagram showing a state where the valve body is accommodated in a valve body accommodating portion as viewed from below;
Fig. 8 is an enlarged view of a facing through-hole;
Fig. 9 is a perspective view of the seal body;
Fig. 10 is a diagram showing a communication path according to another embodiment;
Fig. 11 is a diagram showing a communication path according to another embodiment; and
Fig. 12 is a diagram showing a communication path according to another embodiment.

### DETAILED DESCRIPTION

A cooling module disclosed here is configured to adjust a pressure of a suction port of each of a plurality of pumps. Hereinafter, a cooling module 1 according to an embodiment will be described. The cooling module 1 is not limited to the following embodiment, and various modifications can be made without departing from the gist of this disclosure.

The cooling module 1 is mounted on an electric vehicle that travels by electric energy. The cooling module 1 controls a flow of a fluid between a cooling target, such as a battery, an inverter, or a traveling motor mounted on the electric vehicle, and a heat dissipation unit such as a radiator or a chiller. Here, the fluid is cooling water such as a long-life coolant (LLC), paraffin-based insulating oil or the like, or a refrigerant such as hydrofluorocarbon (HFC) or hydrofluoroolefin (HFO).

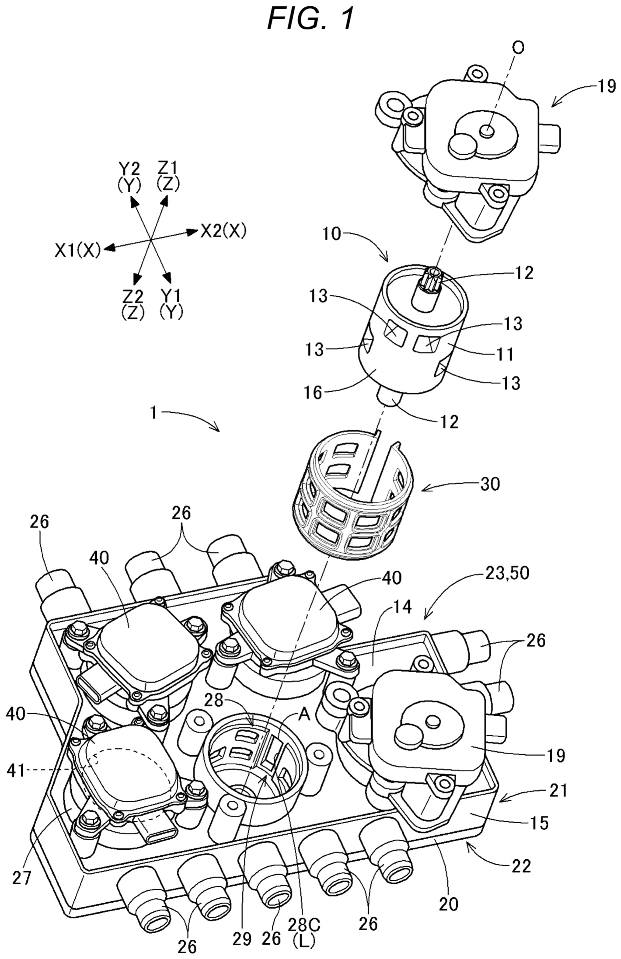

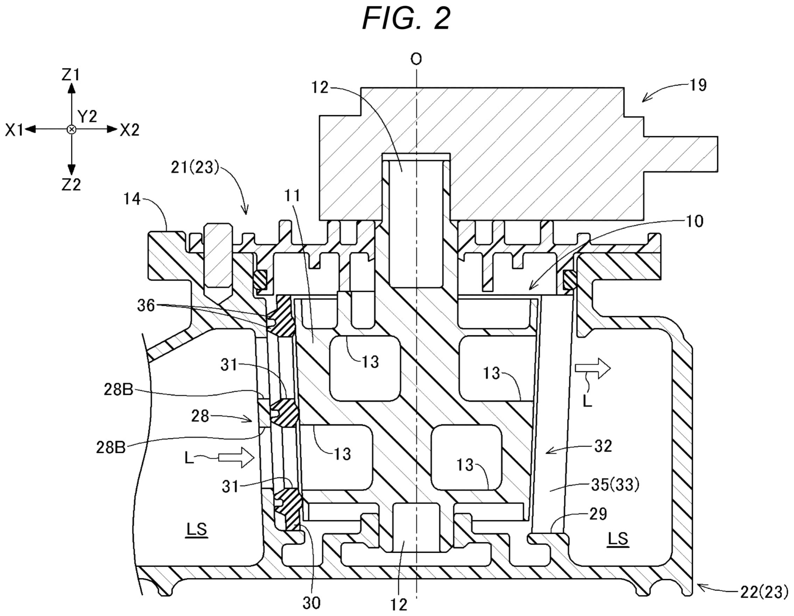

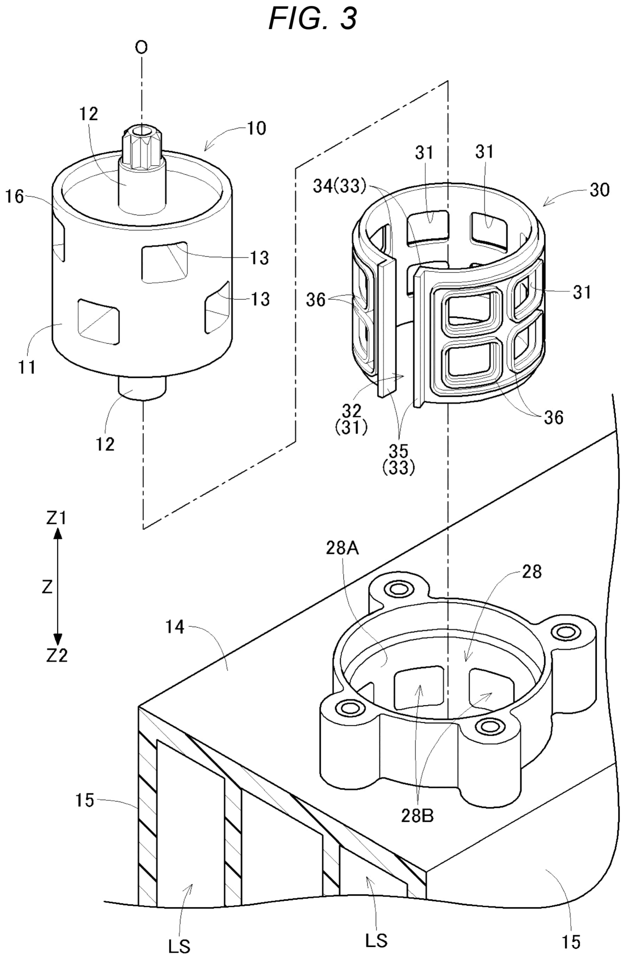

Fig. 1 is an exploded perspective view of the cooling module 1. Fig. 2 is a cross-sectional view of a valve body 10 and a seal body 30. Fig. 3 is an exploded perspective view of the valve body 10 and the seal body 30. As shown in Fig. 1, the cooling module 1 includes the valve body 10, a manifold 20, the seal body 30, pumps 40, and a reserve tank 50. In Fig. 1, the reserve tank 50 is built in the manifold 20, but may be externally attached to the manifold 20 (may be provided separately).

In Fig. 1, an upper side along a Z direction which is a vertical direction is defined as Z1, and a lower side along the Z direction is defined as Z2. One side along an X direction orthogonal to the Z direction is defined as X1, and the other side along the X direction is defined as X2. One side along a Y direction orthogonal to both the X direction and the Z direction is defined as Y1, and the other side along the Y direction is defined as Y2. Hereinafter, they may be referred to as "X1 side", "X2 side", "Y1 side", "Y2 side", "Z1 side", and "Z2 side", respectively.

The valve body 10 includes a valve body portion 11 and an input shaft 12, and pivots in response to an input to the input shaft 12. The valve body portion 11 is configured in a cylindrical shape, and a plurality of flow path openings 13 penetrating the inside are formed. A flow path is formed inside the plurality of flow path openings 13 such that the fluid can flow between the flow path openings 13 set in advance. The input shaft 12 receives a drive force (rotational force) from a valve drive portion 19. Accordingly, the valve body portion 11 pivots in response to the rotational force input to the input shaft 12.

The flow path openings 13 are formed by dividing a region in a circumferential direction to communicate with a plurality of ports 28B formed in an inner wall portion 28A of a valve body accommodating portion 28 described later, every time the valve body portion 11 pivots.

In the embodiment, the flow path openings 13 are provided in two upper and lower stages in a direction along an axis center O (Z direction), that is, side by side on the Z1 side and the Z2 side. In this case, the flow of the fluid can be individually controlled in each of the flow path opening 13 on the Z1 side and the flow path opening 13 on the Z2 side.

Accordingly, the valve body 10 can control the flow of the fluid in the manifold 20 according to the pivoted posture.

The manifold 20 includes a housing 23 which includes a first housing 21 on the Z1 side and a second housing 22 on the Z2 side. The housing 23 is formed by integrating the first housing 21 and the second housing 22, which are made of resin, by, for example, thermal welding.

The first housing 21 includes an upper wall 14 on an upper surface and a side wall 15, and is provided with a flow path chamber LS (see Fig. 2). The flow path chamber LS forms a fluid flow path L through which the fluid flows. Therefore, the fluid flow path L through which the fluid flows is formed inside the housing 23. The flow path chamber LS communicates with any one of a tubular port 26 described later, the valve body 10, and the pumps 40.

The first housing 21 is substantially rectangular as viewed in the Z direction, and is provided with a plurality of tubular ports 26 protruding outward as viewed in the Z direction. Further, the pump 40 is coupled to each of a flange portion 27 on the X1 side and the flange portion 27 on the X2 side in the first housing 21.

The valve body accommodating portion 28 is formed in the housing 23. As shown in Figs. 2 and 3, the valve body accommodating portion 28 is formed in the housing 23 in a tubular shape centered on the axis center O, and accommodates the valve body 10. The inner wall portion 28A of the valve body accommodating portion 28 is provided with the plurality of ports 28B communicating from the inner wall portion 28A to the flow path chamber LS. The valve body accommodating portion 28 is open to the Z1 side from the upper wall 14 of the housing 23, and the open portion is closed by the valve drive portion 19 by fixing the valve drive portion 19 to the upper wall 14.

The plurality of ports 28B have a rectangular flow path cross section, and are arranged side by side in a plurality of regions (eight regions in the embodiment) obtained by equally dividing the region in the circumferential direction (circumferential direction as viewed in the direction along the axis center O) of the valve body accommodating portion 28. The ports 28B are formed side by side in two stages along the Z direction in the direction along the axis center O.

The ports 28B do not need to be formed in all of the plurality of regions (eight regions) along the circumferential direction, and may be formed, for example, in a part of the eight regions equally divided in the circumferential direction. Similarly, the plurality of regions along the circumferential direction are not limited to the eight regions, and may be any number.

The ports 28B include three discharge ports 28C that communicate with respective suction ports of three pumps 40. The discharge port 28C communicates with a coupling port 41 to which each of the three pumps 40 is coupled in the housing 23.

The pump 40 pressure-feeds the fluid flowing through the fluid flow path L. In the embodiment, the three pumps 40 are provided as shown in Fig. 1.

The reserve tank 50 is open to the atmosphere and absorbs thermal expansion of the fluid in the fluid flow path L. The reserve tank 50 is connected to the tubular port 26 provided on the manifold 20. The cooling module 1 is provided with the reserve tank 50. The number of the reserve tanks 50 is smaller than the number of the pumps 40. In the embodiment, the cooling module 1 is provided with the three pumps 40. Therefore, the cooling module 1 is provided with one reserve tank 50. Among the plurality of tubular ports 26, the tubular port 26, to which the reserve tank 50 is connected, communicates with the coupling port 41. The reserve tank 50 may be implemented by opening the fluid flow path L (the flow path chamber LS) provided in the manifold 20 to the atmosphere.

The seal body 30 is provided between an outer peripheral surface 16 of the valve body 10 and the inner wall portion 28A of the valve body accommodating portion 28. The seal body 30 allows the valve body 10 to slide when the valve body 10 pivots, and thus the valve body 10 smoothly pivots and leakage of the fluid is prevented.

As shown in Fig. 3, the seal body 30 is formed in a tubular shape centered on the axis center O, and has a plurality of through-holes 31 in the circumferential direction. The plurality of through-holes 31 is provided in a state of facing the plurality of ports 28B, respectively. The seal body 30 allows the valve body 10 to slide when the valve body 10 pivots as described above, but the seal body 30 does not pivot from a position provided in advance regardless of the pivoting of the valve body 10. In the embodiment, among the plurality of through-holes 31, the plurality of through-holes 31 facing the plurality of discharge ports 28C are referred to as facing through-holes 32.

In the embodiment, the seal body 30 is provided with the plurality of through-holes 31 arranged in two stages along the axis center O (along the Z direction). The seal body 30 is provided with a split groove 33 along the axis center O (along the Z direction). The split groove 33 is communicable with the fluid flow path L formed in the housing 23, and functions as the facing through-hole 32. The split groove 33 has a pair of end portions 34 in the circumferential direction, and is provided with a pair of protruding portions 35 protruding radially outward from the pair of end portions 34. The pair of protruding portions 35 are inserted into a recessed portion 29 formed on the valve body accommodating portion 28, and are exposed to the fluid flow path L.

In the seal body 30, an inner dimension of each through-hole 31 is configured based on an outer dimension of the port 28B. Specifically, the inner dimension of the through-hole 31 and the outer dimension of the port 28B are substantially equal to each other. The seal body 30 is provided with ribs 36 protruding toward the valve body 10 along the periphery of the plurality of through-holes 31. Accordingly, each of the plurality of through-holes 31 is surrounded by the rib 36. It is preferable that the rib 36 has a tapered protruding end. The rib 36 may be configured such that the protruding end is branched and the periphery of the through-hole 31 is doubly or triply surrounded. In any configuration, the rib 36 is provided in a state where the protruding end is pressed against the inner wall portion 28A of the valve body accommodating portion 28.

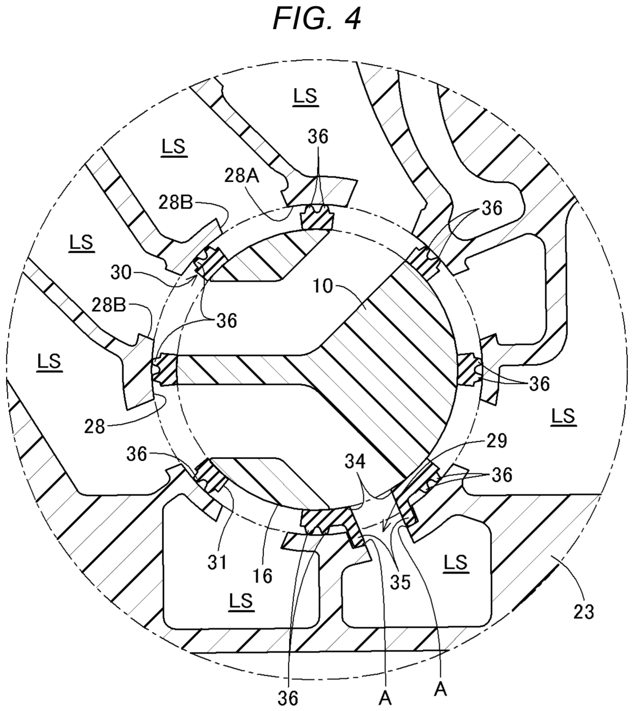

Fig. 4 shows a cross-sectional view of the valve body 10 and the seal body 30. As shown in Fig. 4, the seal body 30 is disposed in contact with the inner wall portion 28A of the valve body accommodating portion 28 such that the through-holes 31 communicate with the ports 28B. That is, the seal body 30 is disposed between the inner wall portion 28A of the valve body accommodating portion 28 and the outer peripheral surface 16 of the valve body 10. The seal body 30 is compressed by being disposed between the outer peripheral surface 16 of the valve body portion 11 and the inner wall portion 28A of the valve body accommodating portion 28. By this compression, an outer surface of the seal body 30 comes into close contact with the inner wall portion 28A of the valve body accommodating portion 28, and an inner surface of the seal body 30 comes into close contact with the outer peripheral surface 16 of the valve body 10.

Accordingly, the rib 36 of the seal body 30 comes into contact with an outer edge portion of the port 28B in the inner wall portion 28A of the valve body accommodating portion 28, and is elastically deformed. A reaction force caused by the elastic deformation acts in a radial direction of the inner wall portion 28A of the valve body accommodating portion 28. The seal body 30 presses the outer peripheral surface 16 of the valve body 10 by the action of the reaction force caused by the elastic deformation of the rib 36.

The housing 23 is provided with a recessed seal receiving portion A capable of accommodating at least a part of the protruding portion 35 of the seal body 30 on a surface facing the protruding portion 35. By accommodating the protruding portion 35 of the seal body 30 in the seal receiving portion A of the housing 23, the relative movement of the seal body 30 with respect to the housing 23 can be limited, and a wide flow path formed by the split groove 33 can be secured.

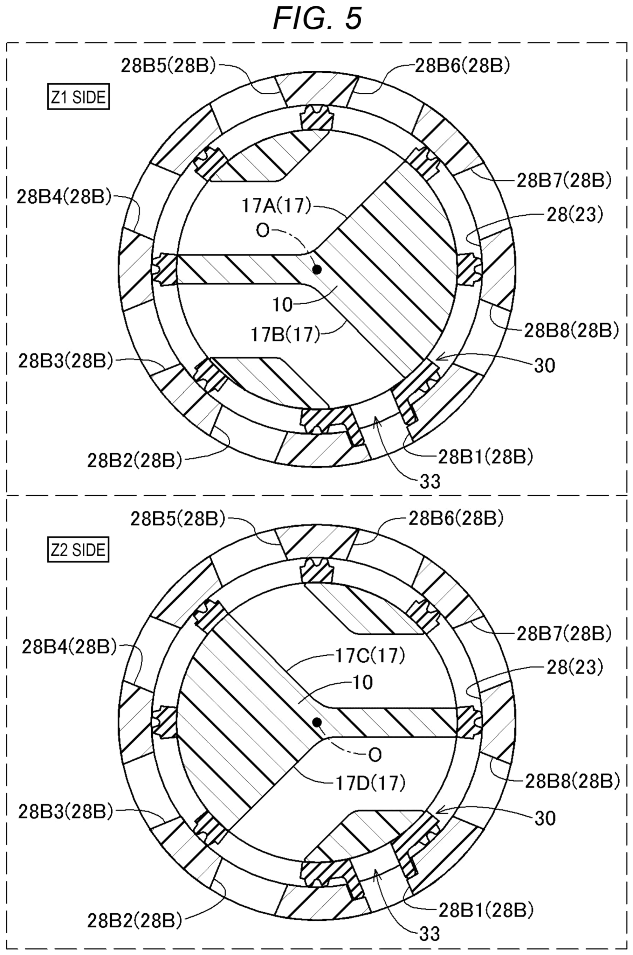

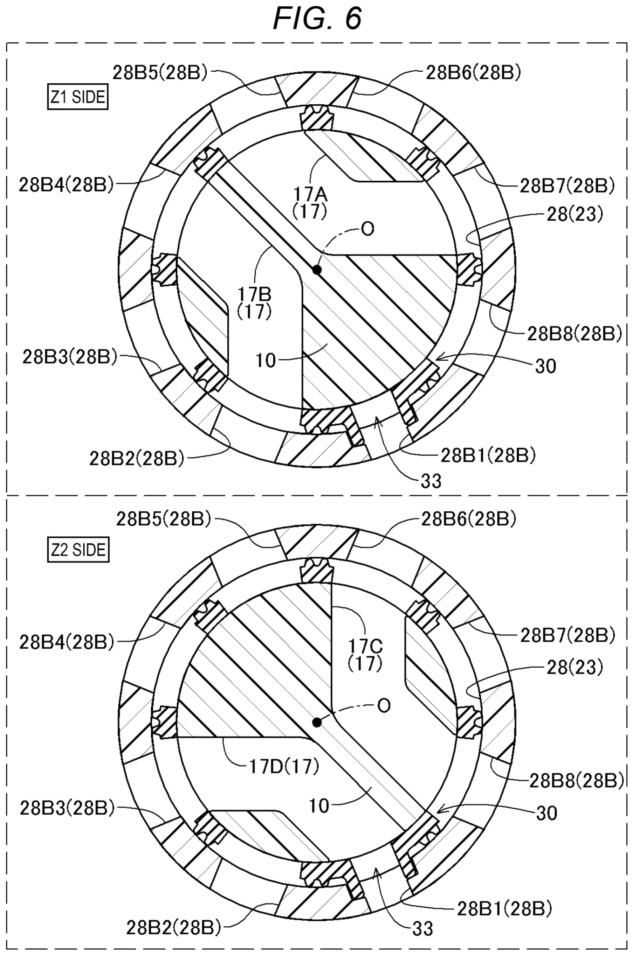

Next, fluid control by the cooling module 1 will be described with reference to Figs. 5 and 6. As shown in Figs. 5 and 6, in the embodiment, the valve body 10 has four internal flow paths 17 therein. Two internal flow paths 17A and 17B among the four internal flow paths 17 are provided on the upper side (Z1 side) along the axis center O in the valve body 10, and the remaining two internal flow paths 17C and 17D among the four internal flow paths 17 are provided on the lower side (Z2 side) along the axis center O in the valve body 10. Therefore, the internal flow path 17 is a flow path that communicates two of the plurality of flow path openings 13 provided on the outer peripheral surface 16 of the valve body 10. In the embodiment, the internal flow path 17 is bent in the middle.

In the embodiment, the inner wall portion 28A of the valve body accommodating portion 28 is provided with eight ports 28B on the Z1 side and eight ports 28B on the Z2 side. Among the eight ports 28B on the Z1 side and the eight ports 28B on the Z2 side, two ports 28B adjacent to each other along the Z direction communicate with each other in the housing 23 (see Fig. 2).

Hereinafter, in order to facilitate understanding, the two ports 28B adjacent to each other along the Z direction are treated as one port-pair, and eight port-pairs are referred to as a port-pair 28B1, a port-pair 28B2, a port-pair 28B3, a port-pair 28B4, a port-pair 28B5, a port-pair 28B6, a port-pair 28B7, and a port-pair 28B8. The port-pair 28B1 communicates with an opening of the split groove 33. Therefore, the port-pair 28B1 may be implemented by a single port 28B. The port-pair 28B2, the port-pair 28B3, the port-pair 28B4, the port-pair 28B5, the port-pair 28B6, the port-pair 28B7, and the port-pair 28B8 are formed clockwise in order from the port-pair 28B1.

In the state shown in Fig. 5, the internal flow path 17A provided on the Z1 side in the valve body 10 communicates with the port-pair 28B4 and the port-pair 28B6, and the internal flow path 17B communicates with the port-pair 28B1 and the port-pair 28B3 via the split groove 33. On the other hand, the internal flow path 17C provided on the Z2 side in the valve body 10 communicates with the port-pair 28B5 and the port-pair 28B7, and the internal flow path 17D communicates with the port-pair 28B2 and the port-pair 28B8.

The state shown in Fig. 6 is a state where the valve body 10 is rotated clockwise by 45 degrees from the state shown in Fig. 5. In this state, the internal flow path 17A provided on the Z1 side in the valve body 10 communicates with the port-pair 28B5 and the port-pair 28B7, and the internal flow path 17B communicates with the port-pair 28B2 and the port-pair 28B4. On the other hand, the internal flow path 17C provided on the Z2 side in the valve body 10 communicates with the port-pair 28B6 and the port-pair 28B8, and the internal flow path 17D communicates with the port-pair 28B1 and the port-pair 28B3 via the split groove 33.

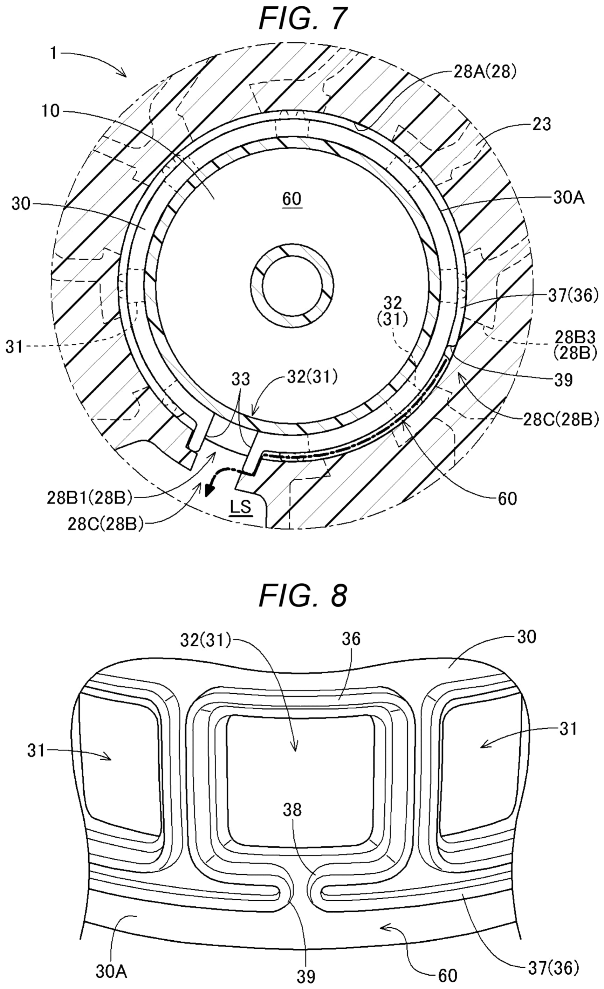

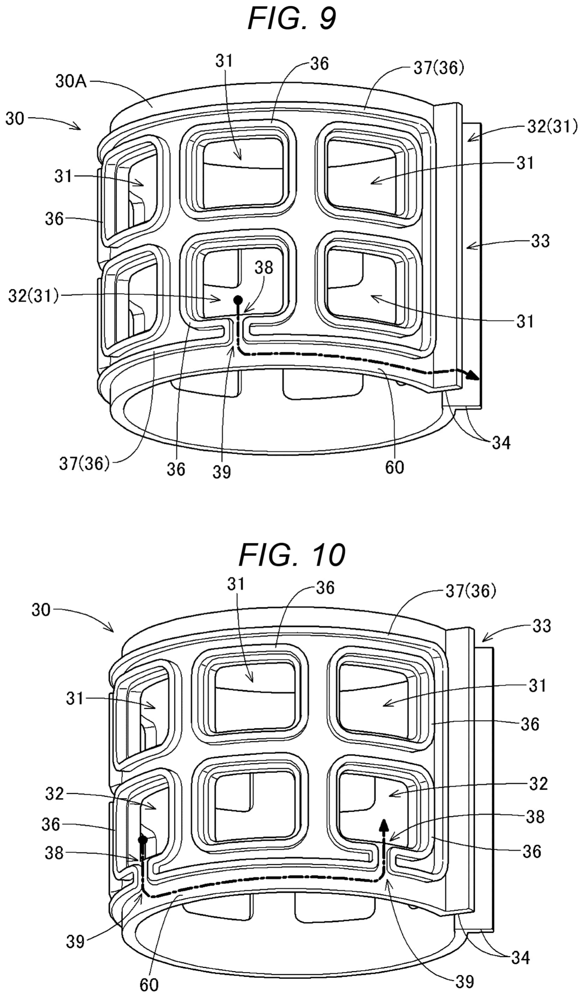

Figs. 7 to 9 show a communication path 60 in the embodiment. Fig. 7 is a diagram showing a state where the valve body 10 is accommodated in the valve body accommodating portion 28 as viewed from the Z2 side. Fig. 8 is an enlarged view of the facing through-hole 32. Fig. 9 is a perspective view of the seal body 30.

In the embodiment, the communication path 60 is provided in which the discharge port 28C communicating with one suction port of the pump 40 and the facing through-hole 32 facing the discharge port 28C communicate with each other. In the embodiment, the cooling module 1 is provided with the three pumps 40. Therefore, since the manifold 20 is provided with the three discharge ports 28C, three facing through-holes 32 are provided. Therefore, the three facing through-holes 32 communicate with each other by the communication path 60. A part of the communication path 60 is formed by an outer peripheral surface 30A of the seal body 30 and the inner wall portion 28A of the valve body accommodating portion 28. In the embodiment, the communication path 60 is formed by an axial end surface of the valve body 10 on the Z2 side and a bottom surface (an example of the inner wall portion 28A) of the valve body accommodating portion 28. The suction ports of the three pumps 40 communicate with each other through the communication path 60, but the discharge ports of the three pumps 40 do not communicate with each other.

In the embodiment, as described above, one of the three facing through-holes 32 is used as the split groove 33. In the embodiment, a suction port of one pump 40 among the three pumps 40 communicates with the port-pair 28B1. It is assumed that the suction port of one pump 40 among the remaining pumps 40 communicates with, for example, the port-pair 28B3. In this case, the facing through-hole 32 corresponds to the port-pair 28B1 and the port-pair 28B3, and the communication path 60 communicates the port-pair 28B1 and the port-pair 28B3 with each other. Although not shown, the suction port of another pump 40 different from the above-described two pumps 40 among the three pumps 40 communicates with any port-pair, and the communicating port-pair functions as the facing through-hole 32.

As described above, the rib 36 protruding radially outward (toward the inner wall portion 28A of the valve body accommodating portion 28) is formed on the seal body 30 (see Fig. 9). The rib 36 surrounds the plurality of through-holes 31, and is further provided along the circumferential direction from one of the pair of end portions 34 of the split groove 33 toward the other (provided along an axial direction on the side of the pair of end portions 34). The ribs 36 provided along the circumferential direction in this way will be described as circumferential ribs 37 in order to facilitate understanding. As shown in Fig. 9, the circumferential ribs 37 are provided on the Z1 side and the Z2 side of the seal body 30. Therefore, a gap is provided along the circumferential direction between the outer peripheral surface 30A on the Z1 side of the circumferential rib 37 on the Z1 side in the seal body 30 and the inner wall portion 28A of the valve body accommodating portion 28, and a gap is provided along the circumferential direction between the outer peripheral surface 30A on the Z2 side of the circumferential rib 37 on the Z2 side in the seal body 30 and the inner wall portion 28A of the valve body accommodating portion 28. This gap can be used as the communication path 60. In the embodiment, since one of the two facing through-holes 32 is the through-hole 31 on the Z2 side of the seal body 30, among the gap on the Z1 side and the gap on the Z2 side described above, the gap on the Z2 side is mainly used as the communication path 60. The gap on the Z1 side and the gap on the Z2 side communicate with each other through a gap between a portion provided along the axial direction of the circumferential rib 37 and the pair of end portions 34. Therefore, the gap on the Z1 side can also be used as the communication path 60.

Here, the split groove 33 is accommodated in the seal receiving portion A, but the pair of end portions 34 of the split groove 33 are not pressed against the seal receiving portion A. Therefore, no fluid is sealed between the pair of end portions 34 and the inner wall portion 28A of the seal receiving portion A. Therefore, the fluid can flow from the pair of end portions 34 to the outside of the split groove 33 along the circumferential direction. Accordingly, the fluid can flow through the gap on the Z2 side used as the communication path 60.

On the other hand, the through-holes 31 on the Z2 side of the seal body 30 are used as the remaining two of the three facing through-holes 32. The rib 36 around the facing through-hole 32 has a groove portion 38 that communicates the facing through-hole 32 with the outer side of the facing through-hole 32 along the circumferential direction. Further, the circumferential rib 37 on the Z2 side has a groove portion 39 communicating the Z1 side and the Z2 side of the circumferential rib 37, and the groove portion 39 is coupled to the groove portion 38 by a pair of wall portions. Accordingly, the facing through-hole 32 can communicate with the communication path 60 on the Z2 side. As described above, in the embodiment, the groove portion 38 and the groove portion 39 are provided in the communication path 60.

As described above, the reserve tank 50 is provided at the suction port of each of the three pumps 40. Therefore, the three facing through-holes 32 communicate with the reserve tank 50. Accordingly, the pressures of the suction ports of the three pumps 40 are in communication with each other via the communication path 60, and the pressures of the suction ports of the three pumps 40 can be adjusted. Since the communication path 60 communicating the suction ports of the three pumps 40 with each other is formed using the gap between the valve body accommodating portion 28 and the seal body 30, it is not necessary to separately form a groove for the communication path in the housing 23 or provide the groove outside. Therefore, the cooling module 1 can be configured to be compact.

The seal body 30 is accommodated in the valve body accommodating portion 28, but a bottom surface of the seal body 30 is placed on the second housing 22. Therefore, the fluid also flows to the Z2 side along the axis center O in the valve body 10. Therefore, in the embodiment, the bottom surface on the valve body accommodating portion 28 is also used as the communication path 60 (see Fig. 7).

### Other Embodiments

Next, other embodiments of the cooling module 1 will be described.

In the above embodiment, the seal body 30 includes the ribs 36 protruding toward the valve body 10 along the periphery of the plurality of through-holes 31, the rib 36 has the groove portion 38 communicating the facing through-hole 32 with the outer side of the facing through-hole 32 along the circumferential direction, and the communication path 60 includes the groove portion 38. However, the communication path 60 may be formed by a groove provided in the housing 23. In this case, the groove portion 38 may not be provided in the rib 36.

In the above embodiment, the seal body 30 is provided with the split groove 33 along the axial direction, and the split groove 33 is one of the plurality of facing through-holes 32. However, the facing through-hole 32 may not be the split groove 33. In this case, as shown in Fig. 10, the rib 36 provided around each of all the facing through-holes 32 may be provided with the groove portion 38 that communicates the facing through-hole 32 with the outer side of the facing through-hole 32 along the circumferential direction. Accordingly, the facing through-holes 32 can communicate with each other by the communication path 60 via the groove portion 38. Therefore, the pressure of the suction port of each of the plurality of pumps 40 can be adjusted.

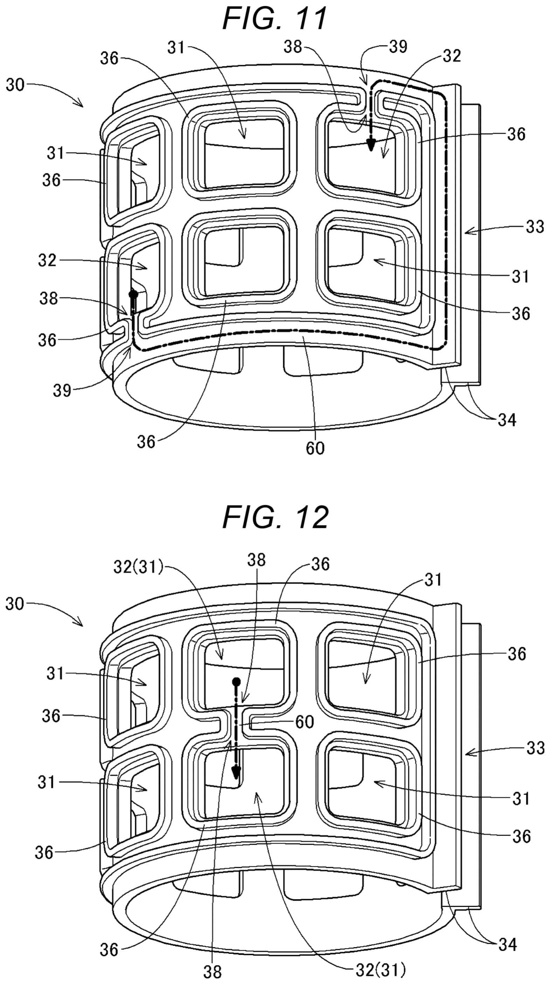

For example, when there are the plurality of facing through-holes 32, some of the plurality of facing through-holes 32 may be set as the through-holes 31 on the Z1 side, and the remaining plurality of facing through-holes 32 may be set as the through-holes 31 on the Z2 side. In the example of Fig. 11, one facing through-hole 32 among the three facing through-holes 32 is provided on the Z1 side, and one of the remaining facing through-holes 32 of the three facing through-holes 32 is provided on the Z2 side. In such a case, by providing the groove portion 38 in the rib 36 provided around each of the facing through-holes 32, the two facing through-holes 32 can communicate with each other via the communication path 60.

Further, for example, when there are the plurality of facing through-holes 32, some of the plurality of facing through-holes 32 may be set as the through-holes 31 on the Z1 side, the remaining plurality of facing through-holes 32 may be set as the through-holes 31 on the Z2 side, and the facing through-holes 32 on the Z1 side and the facing through-holes 32 on the Z2 side may be set at the same positions in the circumferential direction (that is, the facing through-holes 32 on the Z1 side and the facing through-holes 32 on the Z2 side may be set side by side along the Z direction). In the example of Fig. 12, one facing through-hole 32 among the three facing through-holes 32 is provided on the Z1 side, and one of the remaining facing through-hole 32 of the three facing through-holes 32 is provided on the Z2 side. In this case, the groove portion 38 may be provided in a portion on the Z2 side of the rib 36 provided around the facing through-hole 32 on the Z1 side, and the groove portion 38 may be provided in a portion on the Z1 side of the rib 36 provided around the facing through-hole 32 on the Z2 side. Accordingly, it is possible to shorten the communication path 60 that communicates the facing through-hole 32 on the Z1 side with the facing through-hole 32 on the Z2 side.

In the above embodiment, the number of the reserve tank 50 is one. However, a plurality of reserve tanks 50 may be provided as long as the number of the reserve tanks 50 is smaller than the number of the pumps 40.

### Overview of Above Embodiments

Hereinafter, an overview of the cooling module 1 described above will be described.
(1) The cooling module 1 includes: the valve body 10 that pivots in response to an input to the input shaft 12; the manifold 20 including the housing 23, in which the valve body accommodating portion 28 accommodating the valve body 10 is formed and the fluid flow path L through which the fluid flows is formed; the seal body 30 that is provided between the outer peripheral surface 16 of the valve body 10 and the inner wall portion 28A of the valve body accommodating portion 28 and allows the valve body 10 to slide when the valve body 10 pivots; the plurality of pumps 40 that pressure-feed the fluid flowing through the fluid flow path L; and the at least one reserve tank 50 that absorbs thermal expansion of the fluid in the fluid flow path L, the number of the at least one reserve tank 50 being smaller than the number of the pumps 40. The inner wall portion 28A of the valve body accommodating portion 28 is provided with the plurality of ports 28B including the plurality of discharge ports 28C communicating with respective suction ports of the plurality of pumps 40. The seal body 30 has the plurality of through-holes 31 facing the plurality of ports 28B. The plurality of through-holes 31 includes the plurality of facing through-holes 32 facing the plurality of discharge ports 28C. The communication path 60 communicating the plurality of facing through-holes 32 with each other is provided, and a part of the communication path 60 is formed by the outer peripheral surface 30A of the seal body 30 and the inner wall portion 28A of the valve body accommodating portion 28.

According to this configuration, since a part of the communication path 60 that communicates the plurality of facing through-holes 32 with each other is formed by the outer peripheral surface 30A of the seal body 30 and the inner wall portion 28A of the valve body accommodating portion 28, it is not necessary to provide a path for forming the communication path 60 in this part by, for example, a separate member or by processing the housing 23. Therefore, even when the communication path 60 is formed, a compact cooling module 1 can be implemented. Since the number of components does not increase, it is possible to limit an increase in manufacturing cost such as management cost and assembly cost. Further, since the suction ports of the plurality of pumps 40 are in communication with each other via the facing through-holes 32 that are in communication with each other via the communication path 60, it is possible to easily adjust the pressure of these suction ports.

(2) In the cooling module 1 according to (1), it is preferable that the seal body 30 includes the ribs 36 protruding toward the valve body 10 along the periphery of the plurality of through-holes 31, the rib 36 has the groove portion 38 communicating the facing through-hole 32 with the outer side of the facing through-hole 32 along the circumferential direction, and the communication path 60 includes the groove portion 38.

According to this configuration, the facing through-hole 32 on an inner peripheral side of the rib 36 and the outer side of the facing through-hole 32 along the circumferential direction on an outer peripheral side of the rib 36 can communicate with each other via the groove portion 38. Therefore, the communication path 60 formed by the outer peripheral surface 30A of the seal body 30 and the inner wall portion 28A of the valve body accommodating portion 28 can easily communicate with the facing through-hole 32.

(3) In the cooling module 1 according to (1) or (2), it is preferable that the seal body 30 is provided with the split groove 33 along the axial direction, and the split groove 33 is one of the plurality of facing through-holes 32.

According to this configuration, even when the split groove 33 of the seal body 30 is used as the facing through-hole 32, the suction port of the pump 40 communicating with the split groove 33 and the suction port of the pump 40 communicating with the facing through-hole 32 using the through-hole 31 of the seal body 30 can be in communication with each other via the communication path 60. Therefore, the pressure of the suction port of the pump 40 communicating with the split groove 33 can be adjusted.

(4) In the cooling module 1 according to (1) to (3), it is preferable that the number of the reserve tank 50 is one.

According to this configuration, since the pressure of the suction ports of the plurality of pumps 40 is adjusted by one reserve tank 50, the cooling module 1 can be reduced in size as compared with a case where the pressure of the suction ports of the plurality of pumps 40 is adjusted using the plurality of reserve tanks 50. The cooling module 1 can be implemented at low cost as compared with a case where the plurality of reserve tanks 50 are used.

### Industrial Applicability

The technique according to this disclosure can be used for a cooling module.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A cooling module (1) comprising:
a valve body (10) that pivots in response to an input to an input shaft (12);
a manifold (20) including a housing (23), in which a valve body accommodating portion (28) accommodating the valve body is formed and a fluid flow path (L) through which a fluid flows is formed;
a seal body (30) that is provided between an outer peripheral surface (16) of the valve body and an inner wall portion (28A) of the valve body accommodating portion and allows the valve body to slide when the valve body pivots;
a plurality of pumps (40) that pressure-feed the fluid flowing through the fluid flow path; and
at least one reserve tank (50) that absorbs thermal expansion of the fluid in the fluid flow path, the number of the at least one reserve tank being smaller than the number of the pumps, wherein
the inner wall portion of the valve body accommodating portion is provided with a plurality of ports (28B) including a plurality of discharge ports (28C) communicating with respective suction ports of the plurality of pumps,
the seal body has a plurality of through-holes (31) facing the plurality of ports,
the plurality of through-holes includes a plurality of facing through-holes (32) facing the plurality of discharge ports, and
a communication path (60) communicating the plurality of facing through-holes with each other is provided, and a part of the communication path is formed by an outer peripheral surface (30A) of the seal body and the inner wall portion of the valve body accommodating portion.

2. The cooling module according to claim 1, wherein
the seal body includes a rib (36) protruding toward the valve body along a periphery of the plurality of through-holes,
the rib has a groove portion (38) communicating the facing through-hole with an outer side of the facing through-hole along a circumferential direction, and
the communication path includes the groove portion.

3. The cooling module according to claim 1 or 2, wherein
the seal body is provided with a split groove (33) along an axial direction, and
the split groove is one of the plurality of facing through-holes.

4. The cooling module according to any one of claims 1 to 3, wherein
the number of the at least one reserve tank is one.
